# EUROPÄISCHE PATENTSCHRIFT

(11) **EP 1 044 538 B1**
(45) Veröffentlichungstag und Bekanntmachung des Hinweises auf die Patenterteilung: **06.10.2004**
(21) Anmeldenummer: 99947201.2
(22) Anmeldetag: 13.07.1999
(51) Int. Cl.: H04L 12/413, H04L 12/26

(54) **VERFAHREN UND VORRICHTUNG ZUR ÜBERPRÜFUNG DER SPERRFUNKTION EINER NETZWERKKOMPONENTEN-ÜBERTRAGUNGSSPERRVORRICHTUNG**
METHOD AND DEVICE FOR CHECKING THE BLOCKING FUNCTION OF A NETWORK-COMPONENT TRANSMISSION BLOCKING DEVICE
PROCEDE ET DISPOSITIF POUR VERIFIER LA FONCTION DE BLOCAGE D'UN DISPOSITIF DE BLOCAGE DE TRANSMISSION DE CONSTITUANTS DE RESEAU

(30) Priorität: 30.10.1998 DE 19850065
(43) Veröffentlichungstag der Anmeldung: 18.10.2000
(73) Patentinhaber: ROBERT BOSCH GMBH, 70442 Stuttgart (DE)
(72) Erfinder: PEVELING, Wolfgang, D-71522 Backnang (DE); SCHUMACHER, Simone, D-71706 Markgroeningen (DE)
(86) Internationale Anmeldenummer: PCT/DE1999/002158
(87) Internationale Veröffentlichungsnummer: WO 2000/027078

(56) Entgegenhaltungen:
- DE-A- 3 726 742

## Beschreibung

### STAND DER TECHNIK

Die vorliegende Erfindung betrifft ein Verfahren und eine Vorrichtung zur Überprüfung der Sperrfunktion einer Netzwerkkomponenten-Übertragungssperrvorrichtung, mittels welcher eine Übertragungsleitung von der Netzwerkkomponente zum Netzwerk durch eine Sperrfunktion, welche das Anlegen eines logischen Signals an einem ersten Knoten bewirkt, sperrbar ist.

Obwohl auf beliebige Netzwerke anwendbar, werden die vorliegende Erfindung sowie die ihr zugrundeliegende Problematik in bezug auf eine Netzwerkkomponenten-Übertragungssperrvorrichtung eines an Bord eines Kraftfahrzeuges befindlichen Netzwerks, nämlich der CAN-Übertragungssperrfunktion (CANSTOP) des echtzeitfähigen seriellen Bussystems "Contröller Area Network" (CAN), erläutert.

In modernen Kraftfahrzeugen sind über einen Bus, wie z.B. den CAN-Bus, verbundene Netzwerkkomponenten (Steuergeräte, Sensoreinrichtungen, Aktoreinrichtungen) mit eindeutigen Adressen vorgesehen, die gezielt Nachrichten mit eindeutiger Zuordnung zwischen denselben austauschen zu können.

Ein Beispiel für eine solche Netzwerkkomponenten ist eine Abstandsregelungseinrichtung, welche in einem Kraftfahrzeug zur automatischen Abstandsregelung eingesetzt wird.

Die der vorliegenden Erfindung zugrundeliegende Problematik besteht allgemein darin, daß es erforderlich ist, solch eine Netzwerkkomponente in bestimmten Fällen vom Netzwerk abzukoppeln bzw. ihre Übertragungsfunktion an das Netzwerk durch eine Sicherheitsvorrichtung in Form einer Netzwerkkomponenten-Übertragungssperrvorrichtung zu sperren.

In De 3726742 ist eine Störüberwachungsschaltung für einem CAN-Bus beschrieben.

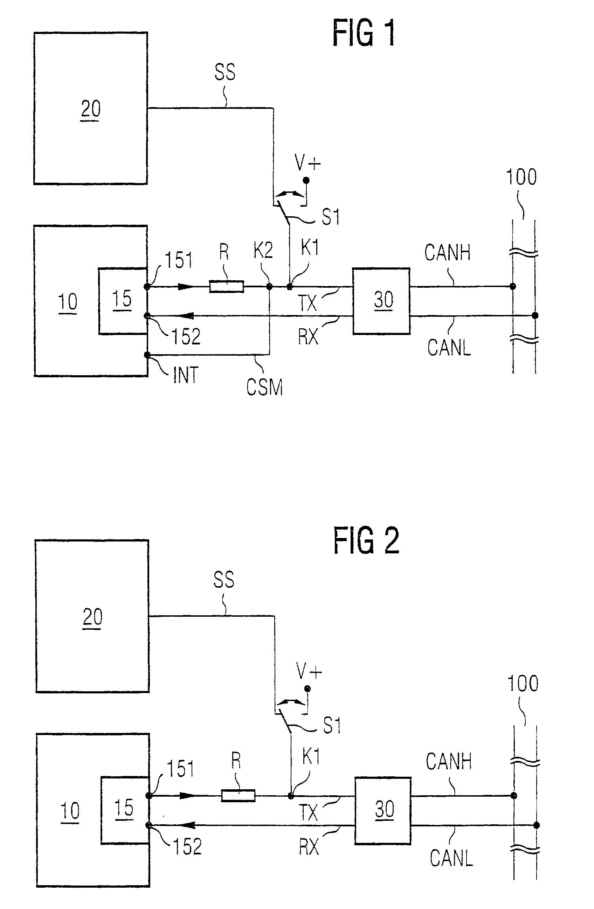

Fig. 2 zeigt eine bekannte solche Übertragungssperrvorrichtung für eine CAN-Netzwerkkomponente.

In Fig. 2 bezeichnen 100 einen Fahrzeug-CAN-Bus, 10 einen Controller einer Abstandsregelungseinrichtung, 20 eine Übertragungssperrsignal-Erzeugungseinrichtung, 15 ein CAN-Steuerteil des Controllers 10 (üblicherweise ein Mikrocontroller), 151 einen TX-Übertragungsport des CAN-Steuerteils 15, 152 einen RX-Empfangsport des CAN-Steuerteils 15, 30 eine CAN-Übertragungs/Empfangseinrichtung, TX eine Übertragungsleitung, RX eine Empfangsleitung, CANH eine CAN-Hochpegelleitung, CANL eine CAN-Niederpegelleitung, S1 einen Schalter, SS eine Sperrsignalleitung, K1 einen ersten Knoten, R einen Widerstand und V+ ein Versorgungspotential.

Im Normalbetrieb sendet der Contoller 10 mittels seines CAN-Steuerteils 15 Signalbotschaften über die unidirektionale Übertragungsleitung TX an die CAN-Übertragungs/ Empfangseinrichtung 30, von wo sie über den Fahrzeug-CAN-Bus 100 an die übrigen Netzwerkkomponenten über die CAN-Hochpegelleitung CANH und die CAN-Niederpegelleitung CANL. Ebenso empfängt er an ihn adressierte Signalbotschaften über die unidirektionale Empfangsleitung RX von der CAN-Übertragungs/Empfangseinrichtung 30.

Mittels der Übertragungssperrsignal-Erzeugungseinrichtung 20, welche im vorliegenden Beispiel ein digitaler Signalprozessor (DSP) ist, können entweder direkt über eine (nicht gezeigte) Verbindung oder indirekt über (ebenfalls nicht gezeigte) andere Komponenten Fehler im Controller 10 erkannt werden.

Als Reaktion darauf gibt die Übertragungssperrsignal-Erzeugungseinrichtung 20 über die Sperrsignalleitung SS ein Sperrsignal an den Schalter S1 aus, welches diesen schließt und somit den ersten Knoten K1 auf der Übertragungsleitung TX mit dem Versorgungspotential V+ verbindet. Dadurch liegt die Übertragungsleitung TX ständig auf einem logischen "1"-bzw. "H"-Pegel, was bewirkt, daß keine Daten, d.h. Pegeländerungen H->L bzw. L→ H, übertragen werden können. Folglich ist die Verbindung des Controllers 10 zum Fahrzeug-CAN-Bus 100 gesperrt, und somit können ungewollte oder unvorhersehbare Reaktionen anderer Netzwerkkomponenten am Fahrzeug-CAN-Bus 100, z.B. in Form von Steuergeräten, verhindert werden.

Der Widerstand R, der zwischen dem ersten Knoten K1 und dem mit der Übertragungsleitung TX verbundenen Übertragungsport 151 liegt, schützt dabei den TX-Übertragungsport 151 vor dem Versorgungspotential V+.

Als nachteilhaft bei dem obigen bekannten Ansatz hat sich die Tatsache herausgestellt, daß ein Test dieser Übertragungssperrvorrichtung, welche aus der Übertragungssperrsignal-Erzeugungseinrichtung 20, der Sperrsignalleitung SS, dem Schalter S1 und dem Versorgungspotential V+ zusammengesetzt ist, durch den Controller 10 bisher nicht ohne eine zusätzliche Testeinrichtung durchführbar ist, da der da die Reaktion im zugehörigen CAN-Steuerteil 15, welches üblicherweise ein integraler Bestandteil des Controllers ist, keine eindeutigen Rückschlüsse im OK-Fall der Übertragungssperrvorrichtung liefert.

Insbesondere ist der OK-Fall (Übertragungssperrvorrichtung funktioniert) nicht unterscheidbar vom Fall, in dem die CAN-Busverbindung zum Controller 10 unterbrochen ist, also beispielsweise die Übertragungsleitung TX und/oder die Empfangsleitung RX und/oder die CAN-Hochpegelleitung CANH und/oder die CAN-Niederpegelleitung CANL unterbrochen ist/sind bzw. die CAN-Übertragungs/Empfangseinrichtung 30 einen Defekt aufweist.

Denn in beiden Fällen generiert das CAN-Steuerteil 15 dieselben Fehlerflags bzw. -marker in seinen internen auswertbaren Registern), wenn es auf einen Versuch hin, eine Signalbotschaft über die Übertragungsleitung TX zu übertragen, nicht innerhalb einer bestimmten Zeit ein bestätigende Antwort über die Empfangskeitung RX erhält. Mit anderen Worten konstatiert es in allen diesen Fällen, daß eine Abkopplung vom Fahrzeug-CAN-Bus 100 vorliegt.

Somit sind übliche Verfahren unter Benutzung einer Zusatzeinrichtung insofern nachteilhaft, als daß sie einen hohen Kosten- und Bedienungsaufwand erfordern.

### VORTEILE DER ERFINDUNG

Das erfindungsgemäße Überprüfungsverfahren mit den Merkmalen des Anspruchs 1 und die entsprechende Überprüfungsvorrichtung gemäß Anspruch 6 weisen gegenüber dem bekannten Lösungsansatz den Vorteil auf, daß sie eine einfache interne Überprüfungsmöglichkeit der Sperrfunktion bieten, ohne einen externen Eingriff in die betreffende Netzwerkkomponente selbst zu erfordern.

Es ist keine zusätzliche Hardware erfoderlich, denn das Verfahren ist sehr einfach und benötigt sehr wenig Rechenzeit. Mit anderen Worten genügt ein minimaler Software-Overhead. Auch funktioniert das Verfahren ohne den Verbund mit den übrigen Netzwerkkomponenten, d.h. ohne die Busanbindung an sich.

Die der vorliegenden Erfindung zugrundeliegende Idee besteht darin, daß eine Rückführungsschleife von der Übertragungsleitung zur Netzwerkkomponente gelegt wird, welche bei aktivierter Sperrfunktion ermöglicht, zwischen einer Fehlfunktion der Netzwerkkomponenter-Übertragungssperrvorrichtung und einer Unterbrechung der CAN-Busverbindung zum Controller zu unterscheiden. Im ersten Fall wird nämlich eine vorbestimmte Prüfsignalbotschaft zur Netzwerkkomponente rückgeführt, im zweiten Fall hingegen nicht.

In den jeweiligen Unteransprüchen finden sich vorteilhafte Weiterbildungen und Verbesserungen.

Gemäß einer bevorzugten Weiterbildung wird das Potential der Übertragungsleitung an einem zweiten Knoten abgegriffen, der zwischen dem ersten Knoten und dem mit der Übertragungsleitung verbundenen Übertragungsport der Netzwerkkomponente liegt. Dies hat den Vorteil, daß je näher der zweite Knoten am Übertragungsport sitzt, desto unempfindlicher er selbst gegen eine potentielle elektrische Unterbrechung ist.

Gemäß einer weiteren bevorzugten Weiterbildung ist die Netzwerkkomponente ein Controller, insbesondere ein Mikrocontroller, mit einer über einen Interruptport steuerbaren Interruptfunktion. In diesem bevorzugten Fall erfolgt das Rückführen des abgegriffen Potentials zum Interruptport und erfolgt das Überprüfen der Sperrfunktion durch Analysieren, ob ein Interrupt ausgelöst wird oder nicht. Einen Interrupt auszunutzen, bedeutet, keinen Rechenzeitverlust zu haben, denn die Controller-Hardware reagiert bei Flankenwechsel mit einem Interruptsignal.

Gemäß einer weiteren bevorzugten Weiterbildung ist die Netzwerkkomponente ein Controller, insbesondere ein Mikrocontroller, mit einem abfragbare; Eingangsport. In diesem bevorzugten Fall erfolgt das Rückführen des abgegriffen Potentials zum abfragbaren Eingangsport und erfolgt das Überprüfen der Sperrfunktion durch Analysieren des Signals am abgefragten Eingangsport. Hier wird ein Polling ausgenutzt, was eine permanente Abfrage des Controllerpins bedeutet. Während dieser Zeit kann zwar i.a. keine andere Prozessorrechenfunktion stattfinden, doch wird auch kein interruptfähiger Controllerport benötigt, welcher bei vielen Anwendungen an sich nicht vorhanden ist.

Gemäß einer weiteren bevorzugten Weiterbildung erfolgt das Anlegen des logischen Signals an dem ersten Knoten durch Schließen eines zwischen dem ersten Knoten und einem Versorgungspotential befindlichen Schalters.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine Überprüfungsvorrichtung für eine bekannte Übertragungssperrvorrichtung für eine CAN-Netzwerkkomponente als Ausführungsbeispiel der vorliegenden Erfindung; und
- Fig. 2: die bekannte Übertragungssperrvorrichtung für eine CAN-Netzwerkkomponente.

### BESCHREIBUNG DER AUSFÜHRUNGSBEISPIELE

Fig. 1 zeigt eine Überprüfungsvorrichtung für eine bekannte Übertragungssperrvorrichtung für eine CAN-Netzwerkkomponente als Ausführungsbeispiel der vorliegenden Erfindung, wobei gleiche Bezugszeichen wie in Fig. 1 gleiche bzw. funktionsgleiche Elemente bezeichnen.

In Fig. 1 bezeichnen zusätzlich zu den bereits eingeführten Bezugszeichen CSM eine Überprüfungssignalleitung, INT einen Interruptport des Controllers 10 und K2 einen zweiten Knoten.

Bei dem Ausführungsbeispiel ist die Überprüfungssignalleitung CSM zum Abgreifens des Potentials der Übertragungsleitung TX am zweiten Knoten K2, der zwischen dem ersten Knoten K1 und dem mit der Übertragungsleitung TX verbundenen Übertragungsport 151 der Netzwerkkomponente 10 in Form des Controllers liegt, vorgesehen. Sie führt das am Knoten K2 abgegriffene Potential der Übertragungsleitung TX zum Interruptport INT.

Das Überprüfungsverfahren läuft bei dem illustrierten Ausführungsbeispiel folgendermaßen ab.

Die Übertragungssperrsignal-Erzeugungseinrichtung 20 in Form des digitalen Signalprozessors aktiviert bei einer Überprüfung auf Veranlassung des Controllers 10 die Sperrfunktion.

Wenn die Übertragungssperrvorrichtung, welche aus der Übertragungssperrsignal-Erzeugungseinrichtung 20, der Sperrsignalleitung SS, dem Schalter S1 und dem Versorgungspotential V+ zusammengesetzt ist, insgesamt funktioniert bewirkt dieses Aktivieren das Anlegen des logischen Signals H an dem ersten Knoten K1 und somit eine Sperrung der Übertragungsleitung TX. Ist jedoch eine Komponente der Übertragungssperrvorrichtung defekt, erfolgt keine Sperrung.

Um dies zu überprüfen, überträgt der Controller 10 daraufhin bei auf seine Veranlassung hin aktivierter Sperrfunktion eine vorbestimmte Prüfsignalbotschaft zum Netzwerk über die Übertragungsleitung TX, z.B. einen einfachen Signalpegelübergang (H->L). Die Prüfsignalbotschaft ist zweckmäßigerweise derart gestaltet, daß sie plausibel ist und damit andere Netzwerkkomponenten, insbesondere Steuergeräte, nicht stören kann, falls die Sperrfunktion nicht funktioniert (NOK-Fall).

Es erfolgt dann ein Überprüfen der Sperrfunktion durch Analysieren des an den Interruptport INT rückgeführten abgegriffenen Potentials beim Übertragen der vorbestimmten Prüfsignalbotschaft. Arbeitet die Übertragungssperrvorrichtung korrekt, gelangen keine Daten auf den Interruptport INT des Controllers 10, d.h. es wird kein Interrupt ausgelöst. Ist ein Defekt der Übertragungssperrvorrichtung vorhanden, so wird ein Interrupt ausgelöst, da das permantente Anlegen des logischen Signals H an dem ersten Knoten K1 nicht eintritt und demzufolge der als Beispiel genannte Signalpegelübergang (H->L) auftreten kann.

Die so erhaltenen Informationen ermöglichen eine eindeutige Erkennung einer ordnungsgemäß arbeitenden Sperrfunktion.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere läßt sich die erfindungsgemäße Überprüfungsvorrichtung nicht nur für CAN-Module an Bord eines Kraftfahrzeuges, sondern für jegliches Netzwerk mit beliebigen Netzwerkkomponenten anwenden.

Auch kann der Potentialabgriff am Knoten K2 prinzipiell an einer anderen Stelle der Übertragungsleitung TX liegen, zweckmäßig ist jedoch eine Anordnung, die sehr dicht hinter dem TX-Übertragungsport 151 oder im CAN-Steuerteil selbst vor dem TX-Übertragungsport 151 liegt, damit die Wahrscheinlichkeit einer nicht durch dieses Verfahren feststellbaren Unterbrechung vor (d.h. in Fig. 1 links von) dem Knoten K2 äußerst gering gehalten ist.

Die Rückführung des abgegriffenen Potentials der Übertragungsleitung TX muß nicht unbedingt auf einen interruptfähigen Controllerport erfolgen. Prinzipiell eignet sich jeder Controllerport dazu, den man - vorzugsweise per Software - auf eine Pegeländerung abfragen bzw. pollen kann.

## Patentansprüche

1. Verfahren zur Überprüfung der Sperrfunktion einer Netzwerkkomponenten-Übertragungssperrvorrichtung, mittels welcher eine Übertragungsleitung (TX) von der Netzwerkkomponente (10) zum Netzwerk durch eine Sperrfunktion, welche das Anlegen eines logischen Signals (H) an einem ersten Knoten (K1) bewirkt, sperrbar ist, **gekennzeichnet durch** die Schritte:
Abgreifen des Potentials der Übertragungsleitung (TX) und Rückführen des abgegriffen Potentials zur Netzwerkkomponente (10);
Aktivieren der Sperrfunktion;
Übertragen einer vorbestimmten Prüfsignalbotschaft bei aktivierter Sperrfunktion von der Netzwerkkomponente (10) zum Netzwerk über die Übertragungsleitung (TX); und
Überprüfen der Sperrfunktion **durch** Analysieren des rückgeführten abgegriffenen Potentials.

2. Verfahren nach Anspruch 1, **gekennzeichnet durch** den Schritt des Abgreifens des Potentials der Übertragungsleitung (TX) an einem zweiten Knoten (K2) zwischen dem ersten Knoten (K1) und dem mit der Übertragungsleitung (TX) verbundenen Übertragungsport (151) der Netzwerkkomponente (10).

3. Verfahren nach Anspruch 1 oder 2, **dadurch gekennzeichnet, daß** die Netzwerkkomponente (10) ein Controller, insbesondere ein Mikrocontroller, mit einer über einen Interruptport (INT) steuerbaren Interruptfunktion ist, das Rückführen des abgegriffen Potentials zum Interruptport (INT) erfolgt und das Überprüfen der Sperrfunktion durch Analysieren, ob ein Interrupt ausgelöst wird oder nicht, erfolgt.

4. Verfahren nach Anspruch 1 oder 2, **dadurch gekennzeichnet, daß** die Netzwerkkomponente (10) ein Controller, insbesondere ein Mikrocontroller, mit einem abfragbaren Eingangsport ist, das Rückführen des abgegriffen Potentials zum abfragbaren Eingangsport erfolgt und das Überprüfen der Sperrfunktion durch Analysieren des Signals am abgefragten Eingangsport erfolgt.

5. Verfahren nach einem der vorhergehenden Ansprüche, **dadurch gekennzeichnet, daß** das Anlegen des logischen Signals (H) an dem ersten Knoten (K1) durch Schließen eines zwischen dem ersten Knoten (K1) und einem Versorgungspotential (V+) befindlichen Schalters (S1) bewirkt wird.

6. Vorrichtung zur Durchführung des Verfahrens nach mindestens einem der vorhergehenden Ansprüche, **gekennzeichnet durch**:
eine Überprüfungssignalleitung (CSM) zum Abgreifen des Potentials der Übertragungsleitung (TX) und Rückführen des abgegriffen Potentials zur Netzwerkkomponente (10);
eine Prüfsignalbotschafts-Übertragungseinrichtung zum Übertragen einer vorbestimmten Prüfsignalbotschaft bei aktivierter Sperrfunktion von der Netzwerkkomponente (10) zum Netzwerk über die Übertragungsleitung (TX); und
einer Überprüfungseinrichtung zum Überprüfen der Sperrfunktion **durch** Analysieren des rückgeführten abgegriffenen Potentials in der Netzwerkkomponente (10) beim Übertragen der vorbestimmten Prüfsignalbotschaft.

7. Vorrichtung nach Anspruch 6, **gekennzeichnet durch**:
einen Widerstand (R), der zwischen dem ersten Knoten (K1) und dem mit der Übertragungsleitung (TX) verbundenen Übertragungsport (151) vorgesehen ist.

8. Vorrichtung nach Anspruch 6 oder 7, **dadurch gekennzeichnet, daß** die Übertragungssperrvorrichtung aufweist:
eine Sperrsignal-Erzeugungseinrichtung (20) zum Erzeugen eines Sperrsignals bei Aktivierung der Sperrfunktion; und
eine Schaltereinrichtung (S1), welche zwischen ein Versorgungspotential (V+) und den ersten Knoten (K1) geschaltet ist, und ansprechend auf das Sperrsignal schließbar ist.

9. Vorrichtung nach einem der Ansprüche 6 bis 8, **dadurch gekennzeichnet, daß** die Überprüfungssignalleitung (CSM) zum Abgreifen des Potentials der Übertragungsleitung (TX) an einem zweiten Knoten (K2) zwischen dem ersten Knoten (K1) und dem mit der Übertragungsleitung (TX) verbundenen Übertragungsport (151) der Netzwerkkomponente (10) angeschlossen ist.

10. Vorrichtung nach einem der Ansprüche 6 bis 8, **dadurch gekennzeichnet, daß** die Überprüfungssignalleitung (CSM) zum Abgreifen des Potentials der Übertragungsleitung (TX) an einem zweiten Knoten (K2) in der Netzwerkkomponente (10) vor dem Übertragungsport (151) der Netzwerkkomponente (10) angeschlossen ist.

11. Vorrichtung nach einem der Ansprüche 6 bis 10, **dadurch gekennzeichnet, daß** die Netzwerkkomponente (10) einen CAN-Controller (15) aufweist, welcher über die Übertagungsleitung (TX) mit einer CAN-Übertragungs/Empfangseinrichtung (30) verbunden ist, welche wiederum an einem CAN-Bus (100) angeschlossen ist.

## Claims

1. Method for checking the blocking function of a network component transmission blocking apparatus, by means of which a transmission line (TX) can be blocked by the network component (10) from the network by a blocking function which causes a logic signal (H) to be applied to a first node (K1), **characterized by** the following steps:
the potential on the transmission line (TX) is tapped off, and the tapped-off potential is fed back to the network component (10);
the blocking function is activated;
a predetermined test signal message is transmitted when the blocking function is activated from the network component (10) to the network via the transmission line (TX); and
the blocking function is checked by analysis of the fed-back, tapped-off potential.

2. Method according to Claim 1, **characterized by** the step of tapping off the potential on the transmission line (TX) at a second node (K2) between the first node (K1) and the transmission port (151), which is connected to the transmission line (TX), of the network component (10).

3. Method according to Claim 1 or 2, **characterized in that** the network component (10) is a controller, in particular a microcontroller, with an interrupt function which can be controlled via an interrupt port (INT), the tapped-off potential is fed back to the interrupt port (INT), and the blocking function is checked by analyzing whether an interrupt is or is not triggered.

4. Method according to Claim 1 or 2, **characterized in that** the network component (10) is a controller, in particular a microcontroller, with an input port which can be checked, the tapped-off potential is fed back to the input port which can be checked, and the blocking function is checked by analysis of the signal at the checked input port.

5. Method according to one of the preceding claims, **characterized in that** the logic signal (H) is applied to the first node (K1) by closing a switch (S1) which is located between the first node (K1) and a supply potential (V+).

6. Apparatus for carrying out the method according to at least one of the preceding claims, **characterized by**:
a checking signal line (CSM) for tapping off the potential on the transmission line (TX) and for feeding back the tapped-off potential to the network component (10);
a test signal message transmission device for transmission of a predetermined test signal message when the blocking function is activated from the network component (10) to the network via the transmission line (TX); and
a checking device for checking the blocking function by analysis of the fed-back, tapped-off potential in the network component (10) during the transmission of the predetermined test signal message.

7. Apparatus according to Claim 6, **characterized by**:
a resistor (R) which is provided between the first node (K1) and the transmission port (151) which is connected to the transmission line (TX).

8. Apparatus according to Claim 6 or 7, **characterized in that** the transmission blocking apparatus has:
a blocking signal production device (20) for production of a blocking signal when the blocking function is activated; and
a switch device (S1) which is connected between a supply potential (V+) and the first node (K1) and which can be closed in response to the blocking signal.

9. Apparatus according to one of Claims 6 to 8, **characterized in that**, in order to tap off the potential on the transmission line (TX), the checking signal line (CSM) is connected to a second node (K2) between the first node (K1) and the transmission port (151) (which is connected to the transmission line (TX)) of the network component (10).

10. Apparatus according to one of Claims 6 to 8, **characterized in that**, in order to tap off the potential on the transmission line (TX), the checking signal line (CSM) is connected to a second node (K2) in the network component (10), upstream of the transmission port (151) of the network component (10).

11. Apparatus according to one of Claims 6 to 10, **characterized in that** the network component (10) has a CAN controller (15) which is connected via the transmission line (TX) to a CAN transmission/receiving device (30), which is in turn connected to a CAN bus (100).

## Revendications

1. Procédé pour contrôler la fonction de blocage, d'un dispositif de blocage de transmission de composantes de réseau qui peut bloquer une ligne de transmission (TX) de la composante de réseau (10) vers le réseau, par une fonction de blocage qui entraîne l'application d'un signal logique (H) sur un premier noeud (K1),
**caractérisé par**
les étapes consistant à :
- mesurer le potentiel de la ligne de transmission (TX) et retourner le potentiel mesuré vers la composante de réseau (10) ;
- activer la fonction de blocage ;
- transmettre par la ligne de transmission (TX ) lorsque la fonction de blocage est activée un message de signal de contrôle prédéterminé de la composante de réseau (10) vers le réseau ; et
- contrôler la fonction de blocage en analysant le potentiel mesuré qui a été retourné.

2. Procédé selon la revendication 1,
**caractérisé par**
l'étape consistant à mesurer le potentiel de la ligne de transmission (TX) sur un second noeud (K2) entre le premier noeud (K1) et le port de transmission (151) de la composante de réseau (10) relié à la ligne de transmission (TX).

3. Procédé selon la revendication 1 ou 2,
**caractérisé en ce que**
la composante de réseau (10) est un contrôleur, en particulier un microcontrôleur, avec une fonction d'interruption commandable par un port d'interruption (INT), le retour du potentiel mesuré est effectué jusqu'au port d'interruption (INT) et le contrôle de la fonction de blocage est effectuée en analysant si une interruption a été ou non déclenchée.

4. Procédé selon la revendication 1 ou 2,
**caractérisé en ce que**
la composante de réseau (10) est un contrôleur, en particulier un microcontrôleur, avec un port d'entrée interrogeable, le retour du potentiel mesuré est effectué jusqu'au port d'entrée interrogeable et le contrôle de la fonction de blocage est effectué en analysant le signal du port d'entrée interrogeable.

5. Procédé selon l'une des revendications précédentes,
**caractérisé en ce que**
l'application du signal logique (H) sur le premier noeud (K1) est entrainée par la fermeture d'un commutateur (S1) positionné entre le premier noeud (K1) et un potentiel d'alimentation (V+).

6. Dispositif de mise en oeuvre du procédé selon au moins une des revendications précédentes,
**caractérisé par**
une ligne de signal de contrôle (CSM) pour mesurer le potentiel de la ligne de transmission (TX) et retourner le potentiel mesuré vers la composante de réseau (10) ;
un dispositif de transmission des messages de signal de contrôle pour transmettre par la ligne de transmission (TX), lorsque la fonction de blocage est activée, un message de signal de contrôle prédéterminé de la composante de réseau (10) vers le réseau ; et
un système de contrôle pour contrôler la fonction de blocage en analysant le potentiel mesuré retourné dans la composante de réseau (10) lors de la transmission du message de signal de contrôle prédéterminé.

7. Dispositif selon la revendication 6,
**caractérisé par**
une résistance (R) prévue entre le premier noeud (K1) et le port de transmission (151) relié à la ligne de transmission (TX).

8. Dispositif selon la revendication 6 ou 7,
**caractérisé en ce que**
le dispositif de blocage de transmission présente :
un système de génération de signaux de blocage (20) pour générer un signal de blocage lors de l'activation de la fonction de blocage ; et
un système de commutation (S1) raccordé entre un potentiel d'alimentation (V+) et le premier noeud (K1) et qui peut être fermé en fonction du signal de blocage.

9. Dispositif selon l'une des revendications 6 à 8,
**caractérisé en ce que**
la ligne de signal de contrôle (CSM) destinée à mesurer le potentiel de la ligne de transmission (TX) est raccordée à un second noeud (K2) entre le premier noeud (K1) et le port de transmission (151) de la composante de réseau (10) relié à la ligne de transmission (TX).

10. Dispositif selon l'une des revendications 6 à 8,
**caractérisé en ce que**
la ligne de signal de contrôle (CSM) destinée à mesurer le potentiel de la ligne de transmission (TX) est raccordée à un second noeud (K2) dans la composante de réseau (10) avant le port de transmission (151) de la composante de réseau (10).

11. Dispositif selon l'une des revendications 6 à 10,
**caractérisé en ce que**
la composante de réseau (10) présente un contrôleur CAN (15) qui est relié par la ligne de transmission (TX) à un système de réception de transmissions CAN (30), qui est lui-même raccordé à un bus CAN (100).
